# EUROPÄISCHE PATENTANMELDUNG

(11) **EP 4 432 422 A2**
(43) Veröffentlichungstag der Anmeldung: **18.09.2024**
(21) Anmeldenummer: 24154288.5
(22) Anmeldetag: 26.01.2024
(51) Int. Cl.: H01M 10/42, H01M 10/654, H01M 10/659, H01M 50/457, H01M 50/417, H01M 50/446, H01M 50/491

(54) **BATTERIEZELLE**

(30) Priorität: 10.02.2023 DE 102023201108
(71) Anmelder: VOLKSWAGEN AG, 38440 Wolfsburg (DE)
(72) Erfinder: Jamadar, Kartik, 38442 Wolfsburg (DE); Medina, Danea, 38304 Wolfenbüttel (DE)

(57) **Zusammenfassung**

Die Erfindung betrifft eine Batteriezelle mit einer Elektroden-/Separatoranordnung aus zumindest einer Kathode (K), einer Anode (A) und einem zwischengeordneten Separator (S) aus PP- und/oder PE-Material (23). Erfindungsgemäß ist im Separator-Material (23) ein pulverförmiges Flammschutzmittel bzw. ein flammhemmendes Mittel (5) eingebettet, mittels dem im Havariefall ein thermisches Durchgehen von einer Elektrode (K, A) zur benachbarten Elektrode (K, A) unterbunden ist.

## Beschreibung

Die Erfindung betrifft eine Batteriezelle nach dem Oberbegriff des Anspruches 1 sowie ein Verfahren zur Herstellung einer solchen Batteriezelle nach Anspruch 10.

Eine gattungsgemäße Batteriezelle weist eine Elektroden-/Separatoranordnung aus zumindest einer Kathode, einer Anode und einem zwischengeordneten Separator auf. Der Separator ist aus einem PP- und/oder PE-Material hergestellt.

Im gattungsgemäßen Separator sind die folgenden drei Aspekte problematisch: Erstens bietet der Separator keinen Brandschutz, um die Wärmeausbreitung in der Batteriezelle zu verringern. Der Separator wird aus Polypropylen (PP) und Polyethylen (PE) hergestellt, deren Schmelzpunkt bei 140°C liegt. Selbst bei 100°C schrumpft der Separator so stark, dass die benachbarte Kathode und Anode in Kontakt kommen. Um die Schrumpfung zu verzögern, ist der Separator mit einer Aluminiumoxidschicht versehen. Die Aluminiumoxidschicht kann die Flammenausbreitung von einer Elektrode zur anderen nicht verhindern. Zwar wird die Schrumpfung durch die Aluminiumoxidschicht des Separators reduziert, jedoch wird die Flammfestigkeit nicht verbessert. Aluminiumoxid ist sehr teuer und erhöht die Kosten für den Separator.

Zweitens liefert der Separator keinen Beitrag zur Kühlung der Elektroden, d.h. der Separator hat keine kühlende Eigenschaft. Seine Temperatur steigt wie die der benachbarten Elektroden. Die Temperaturfestigkeit der Elektroden ist dabei wesentlich größer als die Temperaturfestigkeit des Separators. Der Separator weist zudem eine Abschalteigenschaft (d.h. Shutdown-Eigenschaft) auf, was bedeutet, dass sich die Separator-Poren bei zu hohen Temperaturen schließen und die Batterie unwiderruflich zerstört wird.

Drittens trägt der gattungsgemäße Separator nicht dazu bei, eine gleichmäßige Druckkraft (bzw. eine gleichmäßige mechanische Vorspannung) in der Elektroden-Separatoranordnung bei einer Elektrodenschwellung aufzubauen. Normalerweise quellen sowohl Anode als auch Kathode während der Lithiumeinlagerung auf. Die Anode schwillt bei Anodenmaterial auf Graphitbasis um etwa 20% an, bei Anodenmaterial auf Siliziumbasis kann die Schwellung bis zu 300 % betragen, während die Kathode um 2-3% anschwillt. Das Anschwellen der Elektrode muss durch eine Druckkraft von außerhalb der Zelle begrenzt werden. Dies geschieht im Stand der Technik in der Regel außerhalb des Zellgehäuses durch die Verwendung eines Kompressionspads auf Polyurethan- oder Silikonbasis. Wenn die Elektrode komprimiert wird, kann sie eine Druckkraft auf den Separator ausüben und diesen beschädigen, was schließlich zu einem internen Kurzschluss führt. Daher ist es wichtig, dass an der Schnittstelle zwischen Elektrode und Separator eine Druckkraft auf die Elektrode einwirkt. Dies ist beim derzeitigen Separator nicht der Fall. Darüber hinaus würde die Tatsache, dass die Druckkraft auf Elektrodenebene wirkt, eine homogene Verpressung ermöglichen, die eine inhomogene Lithiumbeschichtung vermeidet, und somit eine längere Zyklusdauer ermöglichen.

Aus der CN 000210956820 U ist ein Separator bekannt, der eine erste Pufferschicht, eine Vielzahl von Isolationsblöcken und eine zweite Pufferschicht aufweist, wobei die Vielzahl von Isolationsblöcken auf einer Seite der ersten Pufferschicht in Abständen angeordnet ist.

Die Aufgabe der Erfindung besteht darin, eine Batteriezelle bereitzustellen, in der im Havariefall ein thermisches Durchgehen innerhalb der Zelle unterbunden ist, und/oder in der Elektroden-/Separatoranordnung eine mechanische Vorspannung einstellbar ist.

Die Aufgabe ist durch die Merkmale des Anspruches 1 oder 10 gelöst. Bevorzugte Weiterbildungen der Erfindungen sind in den Unteransprüchen offenbart.

Die Erfindung geht von einer Lithium-Ionen-Batteriezelle aus, deren Elektroden-/Separatoranordnung aus zumindest einer Kathode, einer Anode und einem zwischengeordneten Separator besteht. Der Separator ist aus einem PP- und/oder PE-Material gefertigt. Gemäß dem kennzeichnenden Teil des Anspruches 1 ist im Separator-Material ein pulverförmiges Flammschutzmittel eingebettet. Mit Hilfe des Flammschutzmittels wird im Havariefall ein thermisches Durchgehen von einer Elektrode zur benachbarten Elektrode unterbunden.

Erfindungsgemäß kann der Separator während des Herstellungsprozesses mit dem Flammschutzmittel z.B. aus Silika versehen werden. Alternativ kann auch Silika verwendet werden, das in Nano-Glimmerpulver eingebettet ist. Alternativ und/oder zusätzlich kann der Separator mit einem Phasenwechselmaterial (PCM) wie Paraffinwachs überzogen sein. Das Phasenwechselmaterial (nachfolgend auch als PCM bezeichnet) wirkt zudem als Klebstoff. Das Phasenwechselmaterial wird wie ein poröses gewebtes Tuch aufgetragen, wobei das gewebte Material aus Phasenwechselmaterial besteht. Die Porosität des Phasenwechselmaterials ist größer bemessen als die Separator-Porosität, so dass das Phasenwechselmaterial die Lithiumionen-Bewegung durch den Separator nicht behindert. Einerseits sorgt das Phasenwechselmaterial für eine sofortige Abkühlung des Separators, sobald der Schmelzpunkt des Phasenwechselmaterials erreicht ist. Andererseits wirkt das Phasenwechselmaterial als Klebstoff zwischen Separator und Elektrode. Eine PVDF-Beschichtung des Separators ist nicht erforderlich. Das Phasenwechselmaterial schmilzt, wenn die Phasenwechseltemperatur erreicht ist. Dadurch wird die Kühlung des Separators unterstützt. Wenn das PCM zu stark schmilzt, schließt es die Poren des Separators und führt zu einem Abschalteffekt (d.h. Shutdowneffekt). Das Phasenwechselmaterial ist so ausgewählt, dass das Schmelzen des PCM mit dem Beginn der kritischen Temperatur in der Zelle übereinstimmt. Verschiedene PCM-Kombinationen werden so ausgewählt, dass sie zunächst einen geringen Kühleffekt und dann einen gesteigerten Kühleffekt bewirken, sobald die Temperatur über die kritische Temperatur ansteigt.

Alterativ und/oder zusätzlich kann die Anode-Außenfläche mit Hartkohle beschichtet werden. In die Hartkohlenstoffbeschichtung sind Aluminiumoxidkristalle eingebettet. Hartkohlenstoff fördert die Interkalation von Lithium, da mehr zufällig verteilte Poren bereitgestellt sind. Aluminiumoxid schützt zudem vor Dendriten-Wachstum. Das bedeutet, dass der Separator nicht unbedingt eine Aluminiumoxidbeschichtung haben muss, was den Separator billiger macht.

Zusammengefasst betrifft die Erfindung folgende Sachverhalte: Der Separator kann flammhemmende Partikel in einer Matrix aus Polyethylen/Polypropylen aufweisen. Das flammhemmende Material kann Silika oder Glimmer sein. Der Separator kann mit einer porösen Folie aus Phasenwechselmaterial (PCM) beschichtet sein. Diese Folie besteht aus einem Material auf Paraffinbasis. Die Anode kann mit einer harten Kohlenstoff-Außenschicht beschichtet sein, in die Aluminiumoxid eingebettet ist. Diese Beschichtung erfolgt als zusätzliche Schicht nach der herkömmlichen Nassbeschichtung der Anode oder als Doppelschicht auf der Anode. Ferner ergibt sich für den Separator durch Verwendung von PCM eine Shutdown-Funktion. Er hat nicht unbedingt eine Aluminiumoxidbeschichtung. Der Separator muss nicht unbedingt eine PVDF-Beschichtung haben, um an der Kathode zu haften. Die PCM-Beschichtung wirkt wie ein Klebstoff. Außerdem kann optional eine PVDF-Beschichtung als zusätzliche Beschichtung auf die Kathode aufgebracht werden. Die Phasenwechselmaterialien sind eine Mischung aus organischen Verbindungen auf Paraffinbasis mit unterschiedlichen Schmelzpunkten. Ein vollständiges Schmelzen würde bei 90°C stattfinden. Der Beginn des Schmelzens beginnt bei 70°C.

Bei der Herstellung des Separators mit darin eingebettetem flammhemmendem Material kann ein Trocken- oder ein Nassverfahren erfolgen. Zunächst wird eine Mischung aus PE/PP-Schmelze mit Silika- oder Glimmerpartikeln zu einer Endlosbahn extrudiert. Anschließend kann ein Nassverfahrens erfolgen. Zur Durchführung des Nassverfahrens wird in die PE/PP-Schmelze als Additiv zusätzlich ein Weichmacher beigemischt. Dieser Weichmacher wird in einem späteren Extraktionsprozess durch Auflösen in Öl entfernt. Auf diese Weise wird die Separator-Porosität erzeugt.

Alternativ dazu kann ein Trockenverfahren angewendet werden, in dem kein Weichmacher als Additiv erforderlich ist. In diesem Fall wird eine PE/PP-Schicht mit flammhemmenden Partikeln zu einer dreischichtigen Struktur laminiert und dann wärmebehandelt und gestreckt, um Porosität zu erzeugen. Es ist auch möglich, dass die mittlere Schicht nur aus flammhemmendem Material besteht und die beiden äußeren Schichten als PE/PP-Schicht. Die Porosität wird durch Glühen und Dehnen aller drei Schichten erzeugt. Es ist möglich, dass die mittlere Schicht, die nur aus flammhemmendem Material bestehen kann, im Nassverfahren hergestellt wird, bei dem die Porosität durch Weichmacher erzeugt wird. Danach wird sie mit einer PE/PP-Schicht auf der Außenseite laminiert und dann wie beim typischen Trockenverfahren laminiert, geglüht und gestreckt.

Wie bereits erwähnt, weist die PCM-Deckschicht eine Klebefunktion auf. Sobald sie in Kontakt mit der Elektrodenoberfläche kommt, hilft sie, den Separator mit der Elektrode zu verkleben. Auf diese Weise werden Lufteinschlüsse zwischen Separator und Elektrode reduziert.

Sobald der Separator mit PCM beschichtet ist, kann er gestapelt oder gewickelt werden. Er wird zusammen mit den Elektroden (Anode und Kathode auf beiden Seiten) gestapelt. Das Stapeln kann nach der Z-Faltmethode oder nach der Wickelmethode (bei der die Elektroden ebenfalls in Form einer Spule und nicht in Form einzelner Segmente wie bei der Z-Faltung vorliegen) erfolgen.

Polyurethan kann als Trägermaterial für die PCM-Fasern oder PCM-Beschichtungen verwendet, da Polyurethan über hervorragende Druckeigenschaften und eine lange Lebensdauer verfügt. Polyurethan bietet eine Druckkraft gegen das Aufquellen der Elektrode. In der nächsten Abbildung ist gewebtes PCM zu sehen. Es könnte sich sehr wohl um eine PCM-Beschichtung handeln. Wichtig ist, dass die PCM-Folie mit Polyurethan-Substrat eine höhere Porosität als der Separator haben sollte.

In einer weiteren Ausführungsvariante kann die Kathode mit PVDF-Pulver beschichtet und anschließend kalandriert werden. Es gibt verschiedene Beschichtungstechniken, um eine durchgehende PVDF-Schicht auf die Kathodenbeschichtung aufzubringen. Bei einer trockenen Beschichtung wird das PVDF-Pulver mit einer Kalanderwalze auf die Kathodenoberfläche aufgetragen. Für die Trockenbeschichtung kann auch das Rotationssprühverfahren verwendet werden, bei dem PVDF-Pulver mit Hilfe der Zentrifugalkraft bei hoher Temperatur auf die Kathodenelektrode gesprüht wird. Wichtig ist, dass die PVDF-Beschichtung nicht in der Lage ist, die Poren auf der Oberfläche zu füllen.

In einer weiteren Ausführungsvariante erfolgt eine Kalandrierung, in der das PVDF-Pulver nicht in die Poren gepresst wird, sondern nur auf der Oberfläche verteilt wird. Der Zusatz von PVDF-Beschichtung auf der Kathode ist optional. Normalerweise sollten Phasenwechselmaterialien eine gute Klebefunktion aufweisen. Die PVDF-Beschichtung wird auf die Kathode aufgetragen, damit der Separator an der Kathode haften kann und keine Lufteinschlüsse dazwischen vorhanden sind. Die PVDF-Beschichtung wird vorliegend nicht mehr auf den Separator, sondern auf die Kathodenoberfläche aufgetragen. Dabei wird das PVDF-Pulver in geringer Menge aufgetragen, so dass die Porosität nicht beeinträchtigt wird, sondern nur als Klebstoff dient.

In einer weiteren Ausführungsvariante kann eine Beschichtung der Anodenschicht mit hartem Kohlenstoff und Aluminiumoxid erfolgen: Die Anode kann mit einer dünnen Schicht aus hartem Kohlenstoff beschichtet sein, die mit Aluminiumoxid als Teil der zweiten Schicht auf beiden Oberflächen der Anode eingebettet ist. Die erste Schicht ist typischer Graphit mit Bindemittel und leitfähigem Kohlenstoff.

Die wesentlichen Vorteile der Erfindung sind wie folgt: So muss der Separator weder mit einer PVDF-Beschichtung noch mit Aluminiumoxid ausgebildet werden, wodurch der Separator kostengünstiger wird. Die PVDF-Beschichtung wird vielmehr auf die Außenfläche der Kathode übertragen. Der erfindungsgemäße Separator kann eine Kompression bei Elektrodenschwellung auf der Elektrodenebene bewirken. Dies erhöht die Lebensdauer der Elektrode und damit die Lebensdauer der Zelle. Die Kompressionskraft auf der Elektrodenebene ist effektiver als auf der Zellebene. Das Phasenwechselmaterial im Separator trägt zu einer schnelleren Kühlung von Separator und Elektrode bei. Durch Verwendung von Phasenwechselmaterial weist der Separator auch eine Abschaltfunktion (Shutdownfunktion) auf, wenn das Phasenwechselmaterial geschmolzen wird (bei hoher Temperatur nahe dem PCM-Schmelzpunkt) und die Poren des Separators füllt. Das flammhemmende Material im Inneren des Separators verzögert die Wärmeausbreitung. Die PVDF-Beschichtung auf der Kathode trägt dazu bei, dass der Separator gleichmäßig mit der Kathode verklebt und somit die Lufteinschlüsse zwischen Kathode und Separator reduziert werden. Dies trägt zu einer schnelleren Kühlfunktion bei. Die Anode kann eine harte Kohlenstoffbeschichtung aufweisen, in die Aluminiumoxidpartikel eingebettet sind. Dies ermöglicht eine schnellere Lithiumeinlagerung, eine schnellere Benetzung und einen besseren Schutz gegen Dendriten. Aluminiumoxid ist auf dem Separator nicht erforderlich. Der Separator hat nicht nur eine Sicherheitsfunktion zur Trennung von Anoden- und Kathodenkontakt. Darüber hinaus kann der der Separator eine Kühlfunktion, eine flammhemmende Funktion und/oder eine Druckpolsterfunktion aufweisen.

Nachfolgend sind die wesentlichen Aspekte der Erfindung nochmals im Einzelnen hervorgehoben: So kann der Separator mittels Extrusion hergestellt werden. Beispielhaft kann zur Extrusion ein Separator-Ausgangsmaterial aus PP und/oder PE sowie gegebenenfalls aus dem pulverförmigen Flammschutzmittel zu einer Kernschichtbahn extrudiert werden. Die Kernschichtbahn kann im weiteren Prozessverlauf zum Separator weiterverarbeitet werden. Der Separator weist in gängiger Praxis eine Porosität auf, um in einem Lade-/Entladebetrieb eine lonenbewegung durch den Separator zu gewährleisten. In einer ersten Ausführungsvariante kann die Separator-Porosität durch einen Naßprozess bereitgestellt werden. Hierzu weist das Separator-Ausgangsmaterial als Additiv ein pulverförmiges Plastifizierungsmittel auf. Dieses wird, gegebenenfalls mit dem pulverförmigen Flammschutzmittel, in der Extrusion in das Separator-Material eingebettet. Nach der Extrusion folgt eine Extraktion, in der die Kernschichtbahn durch ein Extraktionsbad geführt wird. Im Extraktionsbad wird das Plastifizierungsmittel unter Bildung der Porosität aus der Kernschichtbahn herausgelöst. Alternativ dazu kann die Separator-Porosität auch durch einen Trockenprozess bereitgestellt werden. Im Trockenprozess wird kein pulverförmiges Plastifizierungsmittel dem Ausgangsmaterial zugegeben. Vielmehr wird die Kernschichtbahn nach erfolgter Extrusion zunächst wärmebehandelt und anschließend unter Bildung der Porosität gestreckt.

Alternativ und/oder zusätzlich zur oben erwähnten Verbesserung des Flammschutzes kann der Separator ein- oder beidseitig mit einer Phasenwechselmaterialschicht beschichtet sein. In der Phasenwechselmaterialschicht kann ein Großteil von zugeführter thermischer Energie in Form von latenter Wärme gespeichert werden, und zwar für eine Phasenumwandlung von fest nach flüssig. Während der Phasenumwandlung kann die Temperatur des Phasenwechselmaterials weitgehend konstant bleiben. Auf diese Weise ergibt sich eine Kühlwirkung, bei der der Separator sowie die benachbarten Elektroden gekühlt werden können.

Bevorzugt kann das Phasenwechselmaterial so ausgewählt sein, dass es in einem vordefinierten Temperaturbereich, zum Beispiel zwischen 70°C und 100°C, seine Phase von fest nach flüssig ändert. In diesem Fall kann das Phasenwechselmaterial insbesondere ein Stoffgemisch aus unterschiedlichen Phasenwechselmaterialien mit unterschiedlichen Schmelzpunkten sein. Bei Erreichen des vordefinierten Temperaturbereichs, insbesondere mit Erreichen der oberen Temperaturgrenze des Temperaturbereichs, wird das Phasenwechselmaterial teilweise oder vollständig aufgeschmolzen. In diesem Fall wirkt die nunmehr schmelzflüssige Phasenwechselmaterialschicht als eine Shutdownschicht, die im schmelzflüssigen Zustand in die Separator-Poren einfließt und diese schließt. Auf diese Weise ist eine Shutdown-Wirkung realisiert, bei der eine lonenbewegung durch den Separator unterbrochen ist.

Damit im Normalbetrieb die Phasenwechselmaterialschicht eine lonenbewegung durch den Separator nicht beeinträchtigt, ist es von Relevanz, dass die Porosität der Phasenwechselmaterialschicht gleich oder größer bemessen ist als die Porosität des Separators. Zudem weist die Phasenwechselmaterialschicht eine hohe Haftfähigkeit auf, wodurch eine Haftung zwischen Separator und benachbarter Elektrode unterstützt wird.

In einer konkreten Ausführungsform kann die Phasenwechselmaterialschicht zweilagig aufgebaut sein, und zwar aus einer Trägerschicht und einem darauf beschichteten Phasenwechselmaterial. Beispielhaft kann das Phasenwechselmaterial als Fasermaterial oder als ein Folienmaterial bereitgestellt sein. Die Trägerschicht kann bevorzugt aus Polyurethan gebildet sein. Eine solche Polyurethan-Trägerschicht wirkt als elastisch nachgiebiges Kompressionspad, mit dem eine in der Elektroden-/Separatoranordnung wirkende mechanische Vorspannung eingestellt werden kann.

Im Verfahren zur Herstellung der Batteriezelle kann vor einem Stapel-/Wickelprozess zur Herstellung der Elektroden-/Separatoranordnung die Kathode ein- oder beidseitig mit einer PVDF-Schicht beschichtet werden. Auf diese Weise kann eine Haftung zwischen der Kathode und dem Separator unterstützt werden. Der Beschichtungsprozess kann beispielhaft kontinuierlich oder diskontinuierlich erfolgen.

Alternativ und/oder zusätzlich kann vor dem oben erwähnten Stapel-/Wickelprozess ein Beschichtungsprozess erfolgen, in dem die Anode ein- oder beidseitig mit einer Hartkohlenstoffschicht beschichtet wird. Bevorzugt können in der Hartkohlenstoffschicht Aluminiumoxidpartikel eingebettet sein. Die Hartkohlenstoffschicht unterstützt eine Lithiumeinlagerung in der Anode, während die Aluminiumoxidpartikel einen Schutz vor Dendriten-Wachstum bereitstellen.

Nachfolgend sind Ausführungsbeispiele der Erfindung anhand der beigefügten Figuren beschrieben. Es zeigen:

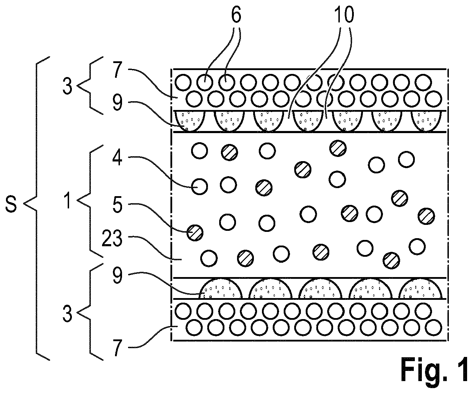

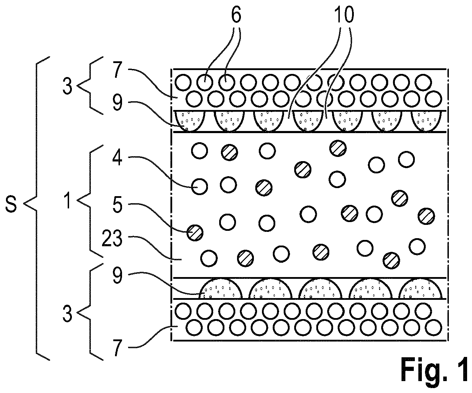

- Figuren 1 bis 9: unterschiedliche Darstellungen von Prozessschritten zur Herstellung der Batteriezelle.

Eine erfindungsgemäße Lithium-Ionen-Batteriezelle weist eine Elektroden-/Separatoranordnung auf, die in einem Stapel- oder Wickelprozess herstellbar ist und im Zellgehäuse der Batteriezelle eingehaust ist. Im fertiggestellten Zustand ist die im Zellgehäuse befindliche Elektroden-/Statoranordnung mit einem Elektrolyt benetzt. Die Elektroden-/Separatoranordnung weist eine Mehrzahl von Anoden A und Kathoden K auf, die in der Stapelrichtung abwechselnd hintereinander angeordnet sind, und zwar jeweils unter Zwischenlage von Separatoren S.

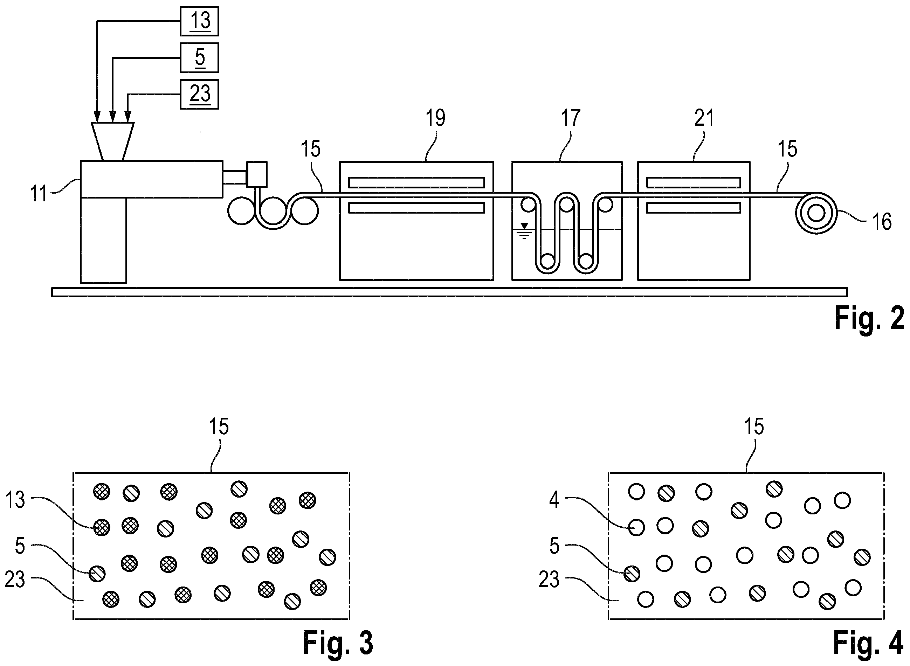

Der Kern der Erfindung betrifft den Materialaufbau des Separators S, wie er in der Figur 1 angedeutet ist. Demnach ist der Separator S dreilagig mit einer mittleren Kernschicht 1 und mit zwei jeweils beidseitig der Kernschicht 1 befindlichen Deckschichten 3 (nachfolgend auch als PCM-Schichten bezeichnet) aufgebaut. Die Kernschicht 1 besteht aus einer Kunststoffmatrix 23 aus porösem PP- und/oder PE-Material, in dem ein pulverförmiges Flammschutzmittel 5 eingebettet ist. Die beiden Deckschichten bzw. PCM-Schichten 3 sind jeweils zweilagig ausgebildet, und zwar aus einer äußeren Trägerschicht 7 und einem darauf beschichteten Phasenwechselmaterial 9. Bevorzugt ist das Phasenwechselmaterial 9 als ein Fasermaterial bereitgestellt, wie es in der Figur 2 angedeutet ist. Im Hinblick auf eine Elektrolytbenetzung befinden sich in der Figur 1 Lücken 10 im Phasenwechselmaterial 9.

Die Trägerschicht 7 ist aus einem porösen Polyurethan gebildet, dessen Poren 6 größer bemessen sind als die Poren 4 der Kernschicht 1, wodurch sich die Lithium-Ionen im Lade-/Entladebetrieb durch den Separator S bewegen können. Beispielhaft kann die Deckschicht 3 weist eine Schichtdicke im Bereich von 10 Mikrometer aufweisen, wobei die Porengröße in einem Bereich von 100 Nanometern liegt. Auf diese Weise behindert es die Bewegung der Lithium-Ionen durch den Separator in keiner Weise. Die Kernschicht 1 des Separators S weist eine wesentlich kleinere Porengröße auf, die etwa bei 20 bis 40 nm liegt.

Die Polyurethan-Trägerschicht 7 wirkt im eingebauten Zustand der Elektroden-/Separatoranordnung als ein elastisch nachgiebiges Kompressionspad, mittels dem im Elektroden-/Separatorstapel eine mechanische Vorspannung einstellbar ist.

Nachfolgend wird anhand der Figuren 2 bis 10 ein Verfahren zur Herstellung des Separators S beschrieben. Wie aus der Figur 2 hervorgeht, wird der Separator S mittels Extrusion hergestellt, bei der ein Separator-Ausgangsmaterial einem Extruder 11 zugeführt wird. Das Separator-Ausgangsmaterial besteht aus PE -und/oder PP-Material 23, dem als Additiv das pulverförmige Flammschutzmittel 5 sowie ein pulverförmiges Plastifizierungsmittel 13 zugegeben wird. Entsprechend extrudiert der Extruder 11 eine Kernschichtbahn 15, in dessen Material sowohl das pulverförmige Flammschutzmittel 5 als auch das pulverförmige Plastifizierungsmittel 13 eingebettet sind.

Die Kernschichtbahn 15 wird einem Naßprozess unterworfen, in dem die Kernschichtbahn 15 durch ein Extraktionsbad 17 geführt und anschließend auf einer Aufwickelrolle 16 aufgewickelt wird. Diese wird im weiteren Prozessverlauf zum Separator S weiterverarbeitet. Wie aus der Figur 2 weiter hervorgeht, ist dem Extraktionsbad 17 sowohl eine Streckeinheit 19 prozesstechnisch vorgeschaltet als auch eine weitere Streckeinheit 21 prozesstechnisch nachgeschaltet.

In der Figur 3 ist in einer vergrößerten Darstellung der Materialaufbau der Kernschichtbahn 15 unmittelbar nach dem Extruder 11 gezeigt. Demnach sind in der PP- und/oder PE-Matrix 23 der Kernschichtbahn 15 sowohl das pulverförmige Flammschutzmittel 5 (in Schrägschraffur) als auch das pulverförmige Plastifizierungsmittel 13 (in Kreuzschraffur) homogen verteilt. In der Figur 4 ist der Materialaufbau der Kernschichtbahn 15 nach erfolgter Extraktion gezeigt. Demnach ist das pulverförmige Plastifizierungsmittel 13 aus der PE- und/oder PE-Matrix 23 der Kernschichtbahn 15 herausgelöst, und zwar unter Bildung der Separator-Poren 4.

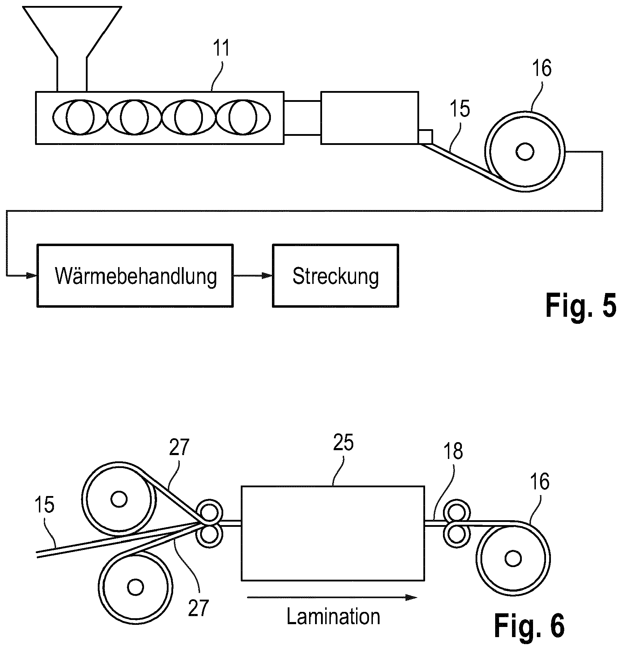

In der Figur 5 ist eine Anlagenskizze gemäß einem weiteren Ausführungsbeispiel gezeigt, in dem die Separator-Poren 4 nicht durch einen Naßprozess erzeugt werden, sondern vielmehr durch einen Trockenprozess: Demnach wird wiederum ein Separator-Ausgangsmaterial in einem Extruder 11 zu einer Kernschichtbahn 15 extrudiert. Im Unterschied zum vorangegangen Ausführungsbeispiel ist in der Figur 4 dem Ausgangsmaterial kein pulverförmiges Plastifizierungsmittel beigemischt. Vielmehr besteht das Separator-Ausgangsmaterial aus PE und/oder PE sowie dem pulverförmigen Flammschutzmittel 5. Die Kernschichtbahn 15 wird nach erfolgter Extrusion einem Wärmebehandlungsschritt zugeführt. Nach Durchführung der Wärmebehandlung wird die Kernschichtbahn 15 einer Streckeinheit zugeführt, in der die Kernschichtbahn 15 unter Bildung der Separator-Poren 4 gestreckt wird.

Die mit den Separator-Poren 4 versehene Kernschichtbahn 15 wird im weiteren Prozessverlauf einer Laminierstation 25 (Figur 6) zugeführt. In der Laminierstation 25 wird die Kernschichtbahn 15 unter Druck und Wärme beidseitig mit einer Deckschichtbahn 27 laminiert. Die in der Laminierstation 25 erzeugte Separatorbahn 18 wird auf einer Aufwickelrolle 16 aufgewickelt. Die Laminierung erfolgt durch mechanischen Walzdruck und mit einer Prozesstemperatur unter dem Schmelzpunkt des Phasenwechselmaterials (d.h. etwa bei 60°C). Der Materialaufbau der beiden Deckschichtbahnen 27 ist identisch wie der in der Figur 1 gezeigte Materialaufbau der Deckschicht 3 (bzw. PCM-Schicht).

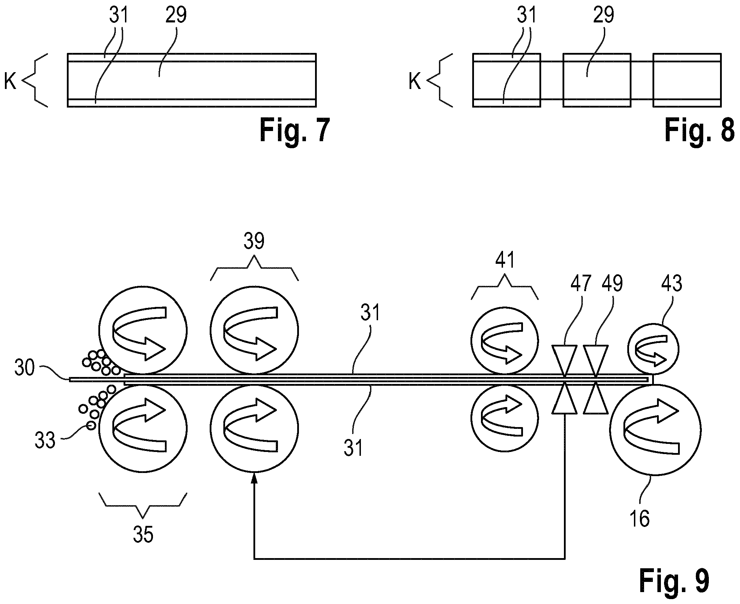

In der Figur 7 ist ein Materialaufbau einer Kathode K angedeutet. Demnach weist die Kathode K ein Aktivmaterial 29 auf, das beidseitig mit einer PVDF-Schicht 31 beschichtet ist. In der Figur 8 sind die beiden PVDF-Schichten 31 kontinuierlich zum Beispiel in einer Gravur-/Tauch- oder Guss-Beschichtung beschichtet. Im Unterschied dazu ist in der Figur 9 der Materialaufbau einer Kathode K gezeigt, bei der die PVDF-Schichten 31 nicht kontinuierlich, sondern vielmehr beidseitig diskontinuierlich beschichtet sind, zum Beispiel in einem Drehsprüh-Verfahren.

In der Figur 9 ist eine Kalandrierstation angedeutet, mittels der eine Kathodenbahn 30 beidseitig mit der PVDF-Schicht 31 beschichtbar ist. Demnach wird ein PVDF-Pulver 33 zusammen mit der Kathodenbahn 30 bei Raumtemperatur in den Walzenspalt eines ersten Kalandrier-Walzenpaars 35 eingeführt. Mittels des ersten Kalandrier-Walzenpaars 35 wird ein erster Kalandrierprozess durchgeführt, bei dem das PVDF-Pulver 33 auf die Kathodenbahn 30 aufgebracht wird. Im weiteren Prozessverlauf durchläuft die Kathodenbahn 30 mit dem darauf aufgebrachten PVDF-Pulver 33 einen Walzenspalt eines zweiten Kalandrier-Walzenpaars 39 unter Wärmebeaufschlagung, wodurch das PVDF-Pulver 33 auf der Kathodenbahn 30 unter Wärmebeaufschlagung verpresst wird. Die Kathodenbahn 30 wird weiter durch ein Kühl-Walzenpaar 41 geführt und anschließend über eine Querstreck-Rolle 43 auf eine Aufwickelrolle 16 aufgewickelt. Die Aufwickelrolle 16 wird einer Weiterverarbeitung zugeführt, in der die Kathoden K gebildet werden. Zwischen dem Kühl-Walzenpaar 39 und der Querstreck-Rolle 43 befindet sich eine Dickenmessung 47 sowie eine Oberflächenüberwachung 49, die zusammen mit dem zweiten Kalandrier-Walzenpaar 39 in einem Regelkreis eingebunden sind.

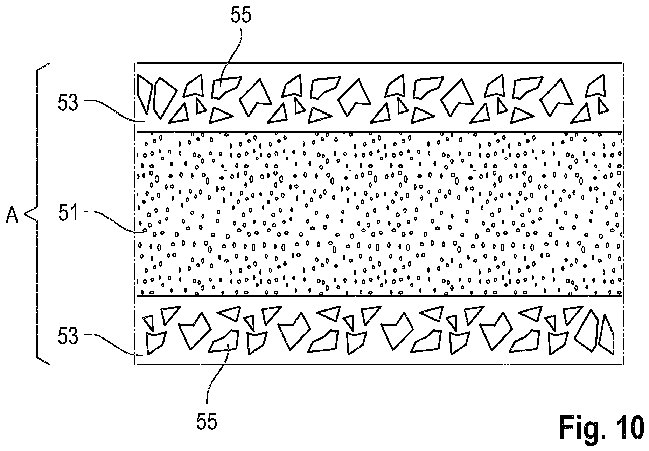

In der Figur 10 ist der Materialaufbau einer Anode A gezeigt, deren Aktivmaterial 51 beidseitig mit einer Hartkohlenstoffschicht 53 beschichtet ist. Deren Dicke beträgt etwa 10 bis 20 µm. In der Hartkohlenstoffschicht 53 sind Aluminiumoxidpartikel 55 eingebettet. Die Hartkohlenstoffschicht 53 unterstützt eine Lithiumeinlagerung in der Anode A, während die Aluminiumoxidpartikel 55 einen Schutz vor den Dendriten-Wachstum bereitstellen.

### Bezugszeichenliste

- 1: Kernschicht
- 3: Deckschichten
- 4: Separator-Poren
- 5: pulverförmiges Flammschutzmaterial
- 6: Trägerschicht-Poren
- 7: Trägerschicht
- 9: Phasenwechselmaterial
- 10: Lücken
- 11: Extruder
- 13: pulverförmiges Plastifizierungsmittel
- 15: Kernschichtbahn
- 16: Aufwickelrolle
- 17: Extraktionsbad
- 18: Separatorbahn
- 19, 21: Streckeinheit
- 23: PP/PE-Matrix
- 25: Laminierstation
- 27: Deckschichtbahn
- 29: Kathoden-Aktivmaterial
- 30: Kathodenbahn
- 31: PVDF-Schicht
- 33: PVDF-Pulver
- 35: erstes Kalandrier-Walzenpaar
- 39: zweites Kalandrier-Walzenpaar
- 41: Kühl-Walzenpaar
- 43: Querstreck-Rolle
- 47: Dickenmessung
- 49: Oberflächenüberwachung
- 51: Anoden-Aktivmaterial
- 53: Hartkohlenstoffschicht
- 55: Aluminiumoxidpartikel
- A: Anode
- K: Kathode
- S: Separator

## Patentansprüche

1. Batteriezelle mit einer Elektroden-/Separatoranordnung aus zumindest einer Kathode (K), einer Anode (A) und einem zwischengeordneten Separator (S) aus PP- und/oder PE-Material (23), **dadurch gekennzeichnet, dass** im Separator-Material (23) ein pulverförmiges Flammschutzmittel bzw. ein flammhemmendes Mittel (5) eingebettet ist, mittels dem im Havariefall ein thermisches Durchgehen von einer Elektrode (K, A) zur benachbarten Elektrode (K, A) unterbunden ist.

2. Batteriezelle nach Anspruch 1, **dadurch gekennzeichnet, dass** der Separator (S) mittels Extrusion herstellbar ist, in der ein Separator-Ausgangsmaterial aus PP und/oder PE sowie aus dem pulverförmigen Flammschutzmittel (5) zu einer Kernschichtbahn (15) extrudiert wird, die insbesondere zum Separator (S) weiterverarbeitet wird.

3. Batteriezelle nach Anspruch 2, **dadurch gekennzeichnet, dass** der Separator (S) eine Porosität (4) aufweist, um im Lade-/Entladebetrieb eine lonenbewegung durch den Separator (S) zu gewährleisten, und dass insbesondere die Separator-Porosität (4) durch einen Prozess bereitstellbar ist, in dem das Separator-Ausgangsmaterial als Additiv ein pulverförmiges Plastifizierungsmittel (13) aufweist, das in der Extrusion in das Separator-Material (23) eingebettet wird, wobei insbesondere das flammhemmende Mittel (5) in Form von feinem Silika- oder Glimmerpulver als Gussmaterial hinzugefügt wird und dann als Folie extrudiert wird, und dass nach der Extrusion eine Extraktion erfolgt, in der die Kernschichtbahn (15) durch ein Extraktionsbad (17) geführt wird, in dem das Plastifizierungsmittel (13) unter Bildung der Porosität (4) aus der Kernschichtbahn (15) gelöst wird, oder dass die Separator-Porosität (4) durch einen Trockenprozess bereitgestellt wird, in dem die Kernschichtbahn (15) zuerst wärmebehandelt wird und anschließend unter Bildung der Porosität (4) gestreckt wird.

4. Batteriezelle, insbesondere nach einem der vorhergehenden Ansprüche, mit einer Elektroden-/Separatoranordnung aus zumindest einer Kathode (K), einer Anode (A) und einem zwischengeordneten Separator (S) aus PP- und/oder PE-Material (23), **dadurch gekennzeichnet, dass** der Separator (S) ein- oder beidseitig mit einer, ein Phasenwechselmaterial aufweisenden Deckschicht (3) beschichtet ist, in der ein Großteil von zugeführter thermischer Energie in Form von latenter Wärme speicherbar ist, und zwar insbesondere für eine Phasenumwandlung von fest nach flüssig, wodurch der Separator (S) sowie benachbarte Elektroden (K, A) kühlbar sind.

5. Batteriezelle nach Anspruch 4, **dadurch gekennzeichnet, dass** das Phasenwechselmaterial (9) so ausgewählt ist, dass es in einem vordefinierten Temperaturbereich, etwa 70°C bis 100°C, seine Phase von fest nach flüssig ändert, und/oder dass während dieses Phasenumwandlungsprozesses Wärme absorbiert wird, und/oder dass das Phasenwechselmaterial (9) insbesondere ein Stoffgemisch aus unterschiedlichen Phasenwechselmaterialien mit unterschiedlichen Schmelzpunkten ist, und/oder dass mit Erreichen des vordefinierten Temperaturbereichs, insbesondere mit Erreichen der oberen Temperaturgrenze des Temperaturbereichs, das Phasenwechselmaterial (9) teilweise oder vollständig geschmolzen ist, so dass die Deckschicht (3) als Shutdownschicht wirkt, die im schmelzflüssigen Zustand in die Separator-Poren (4) fließt und diese schließt, so dass eine lonenbewegung durch den Separator (S) unterbrochen ist.

6. Batteriezelle nach Anspruch 4 oder 5, **dadurch gekennzeichnet, dass** die Porosität (6) der Deckschicht (3) gleich oder größer bemessen ist als die Porosität (4) des Separators (S), und/oder dass die Deckschicht (3) eine hohe Haftfähigkeit aufweist, wodurch eine Haftung zwischen Separator (S) und Elektrode (K, A) unterstützt ist.

7. Batteriezelle nach Anspruch 4, 5 oder 6, **dadurch gekennzeichnet, dass** die Phasenwechselmaterialschicht (3) zweilagig aufgebaut ist aus einer Trägerschicht (7) und einem darauf beschichteten Phasenwechselmaterial (9), und/oder dass das Phasenwechselmaterial (9) als Fasermaterial oder als Folienmaterial bereitgestellt ist, und/oder dass insbesondere die Trägerschicht (7) aus Polyurethan gebildet ist, und dass insbesondere die Polyurethan-Trägerschicht (7) als elastisch nachgiebiges Kompressionspad wirkt, mittels dem eine im Elektroden-/Separatorstapel wirkende mechanische Vorspannung einstellbar ist.

8. Batteriezelle, insbesondere nach einem der vorhergehenden Ansprüche, mit einer Elektroden-/Separatoranordnung aus zumindest einer Kathode (K), einer Anode (A) und einem zwischengeordneten Separator (S) aus PP- und/oder PE-Material (23), **dadurch gekennzeichnet, dass** in einem Fertigungsprozess vor einem Stapel-/Wickelprozess zur Herstellung der Elektroden-/Separatoranordnung die Kathode (K) ein- oder beidseitig mit einer PVDF-Schicht (31) beschichtet wird, um eine Haftung zwischen der Kathode (K) und dem Separator (S) zu unterstützen, und dass insbesondere der Beschichtungsprozess kontinuierlich oder diskontinuierlich erfolgt, wobei insbesondere die PVDF-Schicht (31) auf der Kathode (K) und die PCM-Beschichtung auf dem Separator (S) wie Klebstoff wirken, und/oder dass die Kathode (K) und der Separator (S) zusammenpressbar sind, so dass keine Lufteinschlüsse zwischen Separator (S) und Kathode (K) verbleiben, wodurch eine bessere Kühlung gewährleistet ist, und/oder dass die PVDF-Beschichtung der Kathode (K) und die PCM-Beschichtung des Separators (S) zusammen wie ein Druckpolster wirken, bei dem der Separator (S) und die Kathode (K) bis auf ein Blockmaß verformbar sind und sich danach wie starre Körper verhalten.

9. Batteriezelle, insbesondere nach einem der vorhergehenden Ansprüche, mit einer Elektroden-/Separatoranordnung aus zumindest einer Kathode (K), einer Anode (A) und einem zwischengeordneten Separator (S) aus PP- und/oder PE-Material (23), **dadurch gekennzeichnet, dass** in einem Beschichtungsprozess vor einem Stapel-/Wickelprozess zur Herstellung einer Elektroden-/Separatoranordnung die Anode (A) ein- oder beidseitig mit einer Hartkohlenstoffschicht (53) beschichtet wird, und dass insbesondere in der Hartkohlenstoffschicht (53) Aluminiumoxidpartikel (55) eingebettet sind, und/oder dass die Hartkohlenstoffschicht (53) eine Lithiumeinlagerung in der Anode (A) unterstützt und/oder die Aluminiumoxidpartikel (55) einen Schutz vor Dendriten-Wachstum bereitstellen.

10. Verfahren zur Herstellung einer Batteriezelle nach einem der vorhergehenden Ansprüche.
